# EUROPEAN PATENT APPLICATION

(11) **EP 4 282 651 A1**
(43) Date of publication of application: **29.11.2023**
(21) Application number: 22742609.5
(22) Date of filing: 19.01.2022
(51) Int. Cl.: B32B 27/00, B32B 27/18, B32B 27/32, B65D 65/40

(54) **LAYERED FILM AND PACKAGING BAG**

(30) Priority: 21.01.2021 JP 2021007964; 25.11.2021 JP 2021191262
(71) Applicant: Fujimori Kogyo Co., Ltd., Tokyo 112-0002 (JP)
(72) Inventor: KASHIMA Kousuke, Tokyo 112-0002 (JP); MORI Toshihiko, Tokyo 112-0002 (JP); OZAKI Shinya, Tokyo 112-0002 (JP)
(74) Representative: Lavoix
(86) International application number: PCT/JP2022/001778
(87) International publication number: WO 2022/158487

(57) **Abstract**

This layered film (1) includes a base layer (2) and a sealant layer (4) that becomes one outermost surface of the layered film (1). The base layer (2) contains 77 to 99 parts by mass of a high-density polyethylene (A) having a density of 0.942 to 0.970 g/cm³ and a melt mass-flow rate of 0.1 to 3.0 g/10 min under conditions of a temperature of 190°C and a load of 2.16 kg and 1 to 23 parts by mass of an ultra-high-molecular-weight polyethylene (B) having a density of 0.930 to 0.960 g/cm³ in a total of 100 parts by mass.

## Description

### TECHNICAL FIELD

The present invention relates to a layered film and a packaging bag.

Priority is claimed on Japanese Patent Application No. 2021-7964, filed January 21, 2021, and Japanese Patent Application No. 2021-191262, filed November 25, 2021, the contents of which are incorporated herein by reference.

### BACKGROUND ART

In conventional packaging bags, a layered film having a base layer of polyethylene terephthalate (PET), polyamide (PA) or the like, which is more heat-resistant than a sealant of polyethylene (PE) or the like, laminated on the outside of the sealant has been in use. However, resins of different kinds are used for the sealant and the base layer, and thus the layered film has poor recycling efficiency.

Patent Document 1 describes an agricultural polyolefin-based multi-layer film containing an ultra-high-molecular-weight polyethylene having a weight-average molecular weight of 400,000 or more in at least one layer of an outer layer and an inner layer. It is suggested that this multi-layer film has an improved wear property, is given breaking strength and tear strength and is useful as a coating material and the like for greenhouse horticulture such as agricultural houses or agricultural tunnels.

Patent Document 2 describes a stretched polyolefin-based resin sheet formed by rolling and stretching a sheet composed of a polyolefin-based resin having a weight-average molecular weight of 100,000 to 500,000 and an ultra-high-molecular-weight polyolefin-based resin having a weight-average molecular weight of 1,000,000 or higher. It is suggested that this resin sheet is excellent in terms of tensile strength, tensile stiffness, impact resistance and the like and can be suitably used as a protective member for protecting human bodies from impacts during sports matches.

### [Citation List]

### [Patent Document]

[Patent Document 1]
   Japanese Unexamined Patent Application, First Publication No. 2019-98534
[Patent Document 2]
   Japanese Unexamined Patent Application, First Publication No. 2010-167640

### SUMMARY OF INVENTION

### Technical Problem

In the technique of Patent Document 1, from the viewpoint of the transparency and workability of the film, it is considered to be preferable that a low-density polyethylene and/or an ethylene-vinyl acetate copolymer be contained in a layer containing the ultra-high-molecular-weight polyethylene and a layer not containing the ultra-high-molecular-weight polyethylene. In Patent Document 1, the fraction of a high-density polyethylene in the layer containing the ultra-high-molecular-weight polyethylene is a maximum of 56 mass% (Example 3). In addition, in Patent Document 1, it is described that the layer containing the ultra-high-molecular-weight polyethylene is used as the outer layer, but there is neither description nor suggestion regarding the formation of a packaging bag using the inner layer not containing the ultra-high-molecular-weight polyethylene as a sealant.

In Example 1 of Patent Document 2, it is described that 70 parts by mass of a high-density polyethylene resin having a weight-average molecular weight (Mw) of 330,000, a melting point of 133°C, a density of 0.956 and a melt index (MI) of 0.37 g/10 min and 30 parts by mass of an ultra-high-molecular-weight polyethylene resin having a weight-average molecular weight (Mw) of 2,000,000 to 6,000,000, a melting point of 141°C, a density of 0.928 and an average grain diameter of 150 µm are melt-extruded and stretched to form a stretched sheet having a thickness of 0.65 mm, and then a linear low-density polyethylene film is laminated between the stretched sheets, thereby forming a layered film. However, there is neither description nor suggestion regarding the formation of a packaging bag by disposing the linear low-density polyethylene film in the layered film on one outermost surface.

An objective of the present invention is to provide a layered film having a base layer of a polyethylene resin and a packaging bag that are excellent in terms of thermal distortion resistance, impact resistance and embrittlement resistance.

### Solution to Problem

A layered film of the present invention includes a base layer and a sealant layer that becomes one outermost surface of the layered film, in which the base layer contains 77 to 99 parts by mass of a high-density polyethylene (A) having a density of 0.942 to 0.970 g/cm³ and a melt mass-flow rate of 0.1 to 3.0 g/10 min under conditions of a temperature of 190°C and a load of 2.16 kg and 1 to 23 parts by mass of an ultra-high-molecular-weight polyethylene (B) having a density of 0.930 to 0.960 g/cm³ in a total of 100 parts by mass.

The ultra-high-molecular-weight polyethylene (B) in the base layer may have an average grain diameter of 5 to 200 µm and a weight-average molecular weight of 500,000 or more.

The base layer may contain a shielding agent (C) in a fraction of 5 parts by mass or less.

The shielding agent (C) may be titanium oxide.

The sealant layer may be a layer made of a polyethylene resin.

A layer made of a polyethylene resin may be present on a side of the base layer opposite to the sealant layer.

The base layer may be formed of a resin composition obtained by melting and kneading the high-density polyethylene (A) and the ultra-high-molecular-weight polyethylene (B).

The base layer may be formed into a film shape by extrusion.

In addition, a packaging bag of the present invention is formed using the layered film.

### Advantageous Effects of Invention

According to the present invention, it is possible to enhance thermal distortion resistance, impact resistance and embrittlement resistance in a layered film having a base layer of a polyethylene resin and a packaging bag.

### BRIEF DESCRIPTION OF DRAWINGS

FIG. 1 is an enlarged cross-sectional view showing an embodiment of a layered film of the present invention.
FIG. 2 is an enlarged cross-sectional view showing another embodiment of the layered film of the present invention.
FIG. 3 is a front view showing an embodiment of a packaging bag of the present invention.

### DESCRIPTION OF EMBODIMENTS

Hereinafter, the present invention will be described based on preferable embodiments.

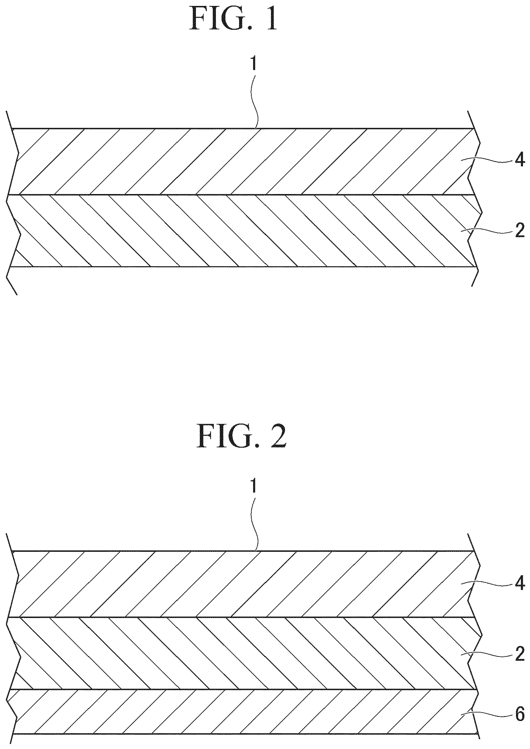

As shown in FIG. 1, a layered film 1 of the present embodiment includes a base layer 2 and a sealant layer 4 that becomes one outermost surface of the layered film 1. The base layer 2 and the sealant layer 4 are preferably formed of a polyethylene resin. This makes it possible to improve the recycling efficiency.

In the layered film 1 of the present embodiment, the base layer 2 contains a high-density polyethylene (A) and an ultra-high-molecular-weight polyethylene (B).

The high-density polyethylene (A) is a polyethylene resin having a density of 942 g/cm³ or higher. The density of the high-density polyethylene (A) is desirably within a range of 0.942 to 0.970 g/cm³ and more preferably within a range of 0.945 to 0.960 g/cm³.

The melt mass-flow rate (MFR) of the high-density polyethylene (A) is desirably within a range of 0.1 to 3.0 g/10 min and more desirably within a range of 0.3 to 1.5 g/10 min under conditions of a temperature of 190°C and a load of 2.16 kg. The melt mass-flow rate indicates the mass (g/10 min) of a molten plastic that is discharged from a die for 10 minutes when the plastic is extruded from the die under regulated conditions. A measuring method is regulated in JIS K 7210-1 "Determination of the melt mass-flow rate (MFR) and melt volume-flow rate (MVR) of thermoplastics."

When the density and MFR of the high-density polyethylene (A) are within the above-described ranges, as a base material film that forms the base layer 2, the high-density polyethylene is excellent in terms of workability and is capable of improving the thermal distortion resistance, impact resistance and embrittlement resistance of the layered film 1.

The proportion of the high-density polyethylene (A) blended is desirably within a range of 77 to 99 parts by mass, may be set within a range of 81 to 99 parts by mass and is more preferably within a range of 88 to 97 parts by mass with respect to a total of 100 parts by mass of the high-density polyethylene (A) and the ultra-high-molecular-weight polyethylene (B). In such a case, it is possible to improve the workability of the base material film even when a material other than the high-density polyethylene (A) in the base layer 2 is a powdery substance such as the ultra-high-molecular-weight polyethylene (B) or a shielding agent (C).

One or more kinds of the high-density polyethylene (A) may be contained in the base layer 2. In a case where two or more kinds of the high-density polyethylene (A) are used, the density, the melt mass-flow rate (MFR) and the like may be different from each other within the above-described ranges. As the proportion of the high-density polyethylene (A) blended, the total of the two or more kinds of high-density polyethylene (A) may be within the above-described range.

The ultra-high-molecular-weight polyethylene (B) is a polyethylene resin having a higher molecular weight and a lower melt viscosity than normal polyethylene and being poorly fluid in a molten state. The density of the ultra-high-molecular-weight polyethylene (B) is preferably within a range of 0.930 to 0.960 g/cm³.

The weight-average molecular weight (Mw) of the ultra-high-molecular-weight polyethylene (B) may be 500,000 or more.

The melt mass-flow rate (MFR) of the ultra-high-molecular-weight polyethylene (B) is lower than 0.1 g/10 min under conditions of a temperature of 190°C and a load of 2.16 kg and is thus immeasurable.

The ultra-high-molecular-weight polyethylene (B) is poorly fluid when heated and is thus difficult to disperse and uniformly melt and mix compared with other polyethylene resins even when melted and kneaded in a sheet shape or a pellet shape (granular shape). Therefore, the ultra-high-molecular-weight polyethylene (B) is desirably a powdery polyethylene. As the ultra-high-molecular-weight polyethylene (B) having a powdery form, for example, HI-ZEX MILLION (registered trademark) and MIPELON (registered trademark) from Mitsui Fine Chemicals, Inc., GUR (registered trademark) from Celanese Corporation and the like are exemplary examples.

In order to obtain flat films from the resin composition containing the ultra-high-molecular-weight polyethylene (B) having a powdery form, the ultra-high-molecular-weight polyethylene (B) preferably has a smaller average grain diameter than the thickness of the base layer 2. For example, the average grain diameter of the ultra-high-molecular-weight polyethylene (B) is preferably within a range of 5 to 200 µm. The average grain diameter of the ultra-high-molecular-weight polyethylene (B) may be smaller than 150 µm, 100 µm or smaller or the like and may be, for example, 25 to 30 µm.

Since the ultra-high-molecular-weight polyethylene (B) is poorly fluid even when melted and kneaded at high temperatures, it is presumed that the average grain diameter of the powder of the ultra-high-molecular-weight polyethylene (B) that is contained in the resin composition before being melted and kneaded becomes approximately the same as the average grain diameter of the particles of the ultra-high-molecular-weight polyethylene (B) that is contained in the base material film after being melted, kneaded and formed.

The proportion of the ultra-high-molecular-weight polyethylene (B) blended is desirably within a range of 1 to 23 parts by mass, may be set within a range of 1 to 19 parts by mass and is more preferably within a range of 3 to 12 parts by mass with respect to a total of 100 parts by mass of the high-density polyethylene (A) and the ultra-high-molecular-weight polyethylene (B). In such a case, the ultra-high-molecular-weight polyethylene is poorly fluid even when melted, and even when the ultra-high-molecular-weight polyethylene (B) having a powdery form is added to the base layer 2, it is possible to improve the workability as the base material film.

One or more kinds of the ultra-high-molecular-weight polyethylene (B) may be contained in the base layer 2. In a case where two or more kinds of the ultra-high-molecular-weight polyethylene (B) are used, the weight-average molecular weight (Mw), the average grain diameter and the like may be different from each other within the above-described ranges. As the proportion of the ultra-high-molecular-weight polyethylene (B) blended, the total of the two or more kinds of ultra-high-molecular-weight polyethylene (B) may be within the above-described range.

The base layer 2 may contain the high-density polyethylene (A) and the ultra-high-molecular-weight polyethylene (B) in ranges of 77 to 99 mass% and 1 to 23 mass%. More desirably, the base layer 2 may contain the high-density polyethylene (A) and the ultra-high-molecular-weight polyethylene (B) in ranges of 88 to 97 mass% and 3 to 12 mass%. In this case, as the total that becomes a standard of 100 mass%, the total amount of the base layer 2 or the total amount of the resin components that are contained in the base layer 2 is an exemplary example.

The base layer 2 may contain an additive as necessary within ranges of the proportions of the high-density polyethylene (A) and the ultra-high-molecular-weight polyethylene (B) blended. The additive may be a substance that is compatible with the high-density polyethylene (A) in a molten state or may be a substance having a powdery form. The additive is not particularly limited, and an ultraviolet absorber, an infrared absorber, a colorant, an anti-blocking agent, a slip agent, an antioxidant, a stabilizer and the like are exemplary examples.

In the base layer 2, resin components other than the additive can be formed of polyethylenes only such as the high-density polyethylene (A) and the ultra-high-molecular-weight polyethylene (B). The base layer 2 may contain, as the resin components, only the high-density polyethylene (A) and the ultra-high-molecular-weight polyethylene (B). In a case where a different resin component is blended in the base layer 2, a polyethylene-based resin such as a medium-density polyethylene is preferable, and the content of the different resin component is desirably kept to a minimum.

As an example of the additive, for example, the base layer 2 may contain a shielding agent (C) in a fraction of 5 parts by mass or less with respect to a total of 100 parts by mass of the high-density polyethylene (A) and the ultra-high-molecular-weight polyethylene (B). The shielding agent (C) is added to the base layer 2 in the case of packaging bags accommodating contents for which light needs to be shielded. In uses where a masking property is not required, there is no need to add the shielding agent (C).

As the shielding agent (C), a variety of pigments such as an inorganic pigment and an organic pigment are exemplary examples. As specific examples of the pigments, black pigments such as titanium-based black pigments, carbon black and iron black (triiron tetraoxide) are exemplary examples. In packaging uses of foods, cosmetics, pharmaceuticals and the like, a hygienically acceptable shielding agent (C) is preferable, and titanium oxide is desirable. The proportion of the shielding agent (C) blended in the case of being added to the base layer 2 is desirably within a range of 1 to 5 parts by mass and more desirably within a range of 2 to 4 parts by mass.

The layered film 1 of the present embodiment has the sealant layer 4 on one outermost surface. The sealant layer 4 is not particularly limited as long as the sealant layer is formed of a sealant resin and preferably contains a polyethylene resin as a sealant. In such a case, it is possible to thermally bond the sealant layers 4 to each other by making two layered film 1 face each other. In addition, the sealant layer 4 and the base layer 2 are layers made of a polyethylene resin, whereby the recycling efficiency improves.

As the polyethylene resin that is used as the sealant, a linear low-density polyethylene (LLDPE), a low-density polyethylene (LDPE) and the like are exemplary examples. The sealant layer may be a monolayer or multiple layers. The sealant layer 4 may contain an additive as a component other than the resin. The additive in the sealant layer 4 is not particularly limited, and, for example, an antioxidant, a lubricant, an anti-blocking agent, a stabilizer, an ultraviolet absorber, a flame retardant, an antistatic agent, a colorant and the like are exemplary examples.

A method for manufacturing the layered film 1 of the present embodiment is not particularly limited, and each layer that configures the layered film 1 may be laminated as appropriate by an extrusion lamination method, a dry lamination method, a co-extrusion method or a joint use thereof. For example, the base layer 2 and the sealant layer 4 may be each formed into a film shape, and an obtained base material film and a sealant film may be laminated by a dry lamination method or the like. In addition, a base material film may be formed earlier, and then the sealant layer 4 may be laminated on the base material film by an extrusion lamination method. In addition, the sealant layer 4 and the base layer 2 may be formed at the same time by a co-extrusion method.

In a case where printing is performed on the layered film 1, a print layer may be formed on the inner surface or outer surface of the base material film to be laminated with the sealant layer 4. In addition, a print layer may be formed on the outer surface of the sealant film after the sealant layer 4 to be laminated with the base layer 2 is formed into a film shape. In addition, a print layer may be formed on the outer surface of the base layer 2 after the base layer 2 and the sealant layer 4 are laminated together. The layered film 1 may have print layers at two or more places in the thickness direction.

In the layered film 1 of the present embodiment, the thickness of the base layer 2 is not particularly limited. The thickness can be designed as appropriate depending on the uses of packaging materials or the like and is usually approximately 10 to 200 µm and preferably 15 to 120 µm. The thickness of the sealant layer 4 is also not particularly limited, but is, for example, approximately 10 to 200 µm and preferably 15 to 120 µm.

The base layer 2 is preferably formed by melting and kneading the high-density polyethylene (A) and the ultra-high-molecular-weight polyethylene (B). At the time of melting and kneading, both the high-density polyethylene (A) and the ultra-high-molecular-weight polyethylene (B) may be kneaded in a molten state. When the additive such as the shielding agent (C) is used, both may be kneaded in a state where at least the high-density polyethylene (A) has been melted.

In addition, a method for forming the base layer 2 into a film shape is not particularly limited, and the base layer may be formed into a film shape by, for example, an extrusion method. According to extrusion, it is possible to fluidize the resin composition by heating and melting in the absence of a solvent and thereby easily form a film having a uniform thickness. In addition, it is possible to make the dispersion state of the particles of the ultra-high-molecular-weight polyethylene (B), the shielding agent (C) or the like in the base layer 2 favorable by cooling and rapidly solidifying the film of the extruded molten resin.

The film that is obtained by the step of extruding the base layer 2 may be a single-layer base material film or may be the layered film 1 in which the base layer 2 and the sealant layer 4 have been co-extruded. As a method for producing the film of the extruded molten resin, T die forming, inflation forming and the like are exemplary examples. The layered film 1 may have two or more base layers 2.

A master badge containing the ultra-high-molecular-weight polyethylene (B) or the additive such as the shielding agent (C) may be produced in advance. The master badge can be produced by melting and kneading a higher concentration of the ultra-high-molecular-weight polyethylene (B) or the additive such as the shielding agent (C) than the concentration in the base layer 2 together with the high-density polyethylene (A). In a case where a resin composition obtained by melting and kneading the master badge and the high-density polyethylene (A) is formed during extrusion, it is possible to make melting and kneading before extrusion efficient.

After T die forming, it is preferable to perform a heat treatment using a cooling roll while the film immediately after extrusion remains heated. In such a case, it is possible to rapidly cool the base material film or layered film 1 after the forming, which makes the method more effective. Uniformity in the molten state can also be maintained even after the cooling by fixing the particle shapes of the ultra-high-molecular-weight polyethylene (B) or the dispersion state of the shielding agent (C) or the like while the film is cooled.

In a case where a long film is continuously formed, winding of a long compact of the film after the forming makes the productivity excellent, which is preferable. In addition, before the base layer 2 that has been formed into a film is laminated with the sealant layer 4, the base layer 2 may be stretched by a method such as uniaxial stretching or biaxial stretching. This improves the strength and thermal distortion resistance of the layered film 1, which is effective. In a case where the base layer 2 has been stretched, it is possible to suppress pitch deviation at the time of working the layered film 1 into packaging bags or the like.

For example, in uses where printing on the layered film 1 is unnecessary, since there is no need to consider pitch deviation, the film may be formed without undergoing the stretching step. In a case where the stretching step is not performed, the base layer 2 and the sealant layer 4, which are adjacent to each other, may be co-extruded at the same time by the co-extrusion method.

As shown in FIG. 2, the layered film 1 of the present embodiment may have an outer layer 6 made of a polyethylene resin on the outside of the base layer 2, which is a side opposite to the sealant layer 4. The polyethylene resin that is used to form the outer layer 6 is not particularly limited, and a linear low density polyethylene (L-LDPE), a low density polyethylene (LDPE), medium-density polyethylene (MDPE), a high-density polyethylene (HDPE) and the like are exemplary examples. An additive in the outer layer 6 is not particularly limited, and, for example, an antioxidant, a lubricant, an anti-blocking agent, a stabilizer, an ultraviolet absorber, a flame retardant, an antistatic agent, a colorant and the like are exemplary examples. The outer layer 6 may be a layer that is not thermally bonded at the same time as the sealant layer 4, and the layered film 1 may have the sealant layer 4 on only one surface. The outer layer 6 may be a layer that can be thermally bonded in the same manner as the sealant layer 4, and the layered film 1 may have the sealant layers 4 on both surfaces.

A method for manufacturing the layered film 1 having three layers of the sealant layer 4, the base layer 2 and the outer layer 6 as resin layers is not particularly limited, and the individual layers may be made into films and laminated in an arbitrary order or sequentially or two or more layers may be made into films and laminated at the same time. The sealant layer 4, the base layer 2 and the outer layer 6 are each a layer made of a polyethylene resin, whereby the recycling efficiency improves.

For example, the individual layers may be made into films and then laminated by a dry lamination method or the like.

In addition, the sealant layer 4 or the outer layer 6 may be laminated on the base layer 2 by an extrusion lamination method after the base layer 2 is made into a film in advance. In addition, the three layers of the sealant layer 4, the base layer 2 and the outer layer 6 may be formed at the same time by a co-extrusion method. The outer layer 6 may be laminated on the outside of the base layer 2 after the sealant layer 4 and the base layer 2 are laminated earlier. The sealant layer 4 may be laminated on the inside of the base layer 2 after the outer layer 6 and the base layer 2 are laminated earlier.

The uses of the layered film 1 of the present embodiment are not limited, and the layered film can be used to manufacture containers such as packaging bags. The packaging bags are not particularly limited, and pouches, bags, three-side seal bags, four-side seal bags, pillow bags, gusseted bags, standing up bags and the like are exemplary examples. Packaging containers may be formed of only the layered film 1 of the present embodiment or the layered film 1 may be combined with an accessory such as a label, a tag, a straw or a spout.

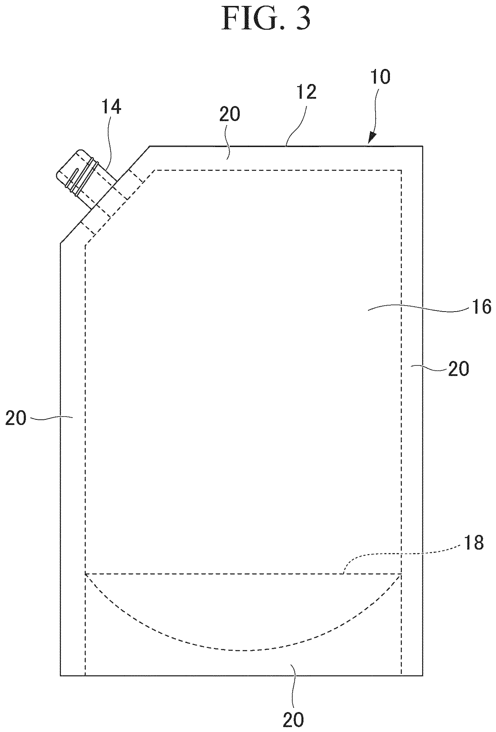

FIG. 3 is a front view showing a standing pouch 10 as an example of a packaging bag for which the layered film 1 is used, and this standing pouch 10 includes a hollow container body 12 and a spout member 14 provided at one end of the container body 12. The container body 12 is formed of, for example, two trunk films 16 forming rectangular shapes having the same planer shape as each other and a bottom film 18. The trunk films 16 and the bottom film 18 are all formed of the layered films 1, and the outer edge portions of the individual sealant layers 4 are thermally fused together to form a heat seal portion 20. Therefore, the container body 12 forms a bag shape as a whole, contents can be put into and out of the container body 12 through the spout member 14, and, in a state where there are no contents inside, the standing pouch collapses and forms a planar shape. The present invention is not limited to standing pouches, can be applied to a variety of packaging bags for which a laminated body is used, is a mono-material and is capable of providing a packaging bag having favorable thermal distortion resistance, impact resistance and embrittlement resistance.

In a case where the packaging bag is composed of two or more members, the layered film 1 of the present embodiment may be used as one or more specific members, and a different layered film or a single-layer film may be used as the other member. The layered film 1 of the present embodiment has an excellent strength and thus can be used to manufacture not only small packaging bags but also large packaging bags capable of accommodating heavy contents.

The state of the contents is not particularly limited, and liquid, powder, grain, solid and the like are exemplary examples. The kind of the contents is not particularly limited, and detergents, drugs, cosmetics, pharmaceuticals, foods, beverages, seasonings, inks, paints, fuels and the like are exemplary examples. The packaging bag may contain two or more kinds of contents in a mixed state or separately. The packaging bag may have one space where the contents are accommodated or may have two or more spaces.

According to the present embodiment, it is possible to provide the layered film 1 having the base layer 2 of a polyethylene resin and the packaging bag 10 that are excellent in terms of thermal distortion resistance, impact resistance and embrittlement resistance.

Hitherto, the present invention has been described based on the preferable embodiments, but the present invention is not limited to the above-described embodiments and can be modified in a variety of manners within the scope of the gist of the present invention.

The layered film of the embodiment is a resin film containing a polyethylene as a main component and is thus not limited to the use of packaging bags, but may be used in a variety of uses such as packaging, display, testing, storage and shielding.

### EXAMPLES

Hereinafter, the present invention will be specifically described using examples.

### (Method for forming base material film)

Resins were melted and kneaded according to the compositions of base layers shown in Table 1, and single-layer base material films made of a base layer were extruded in a thickness of 100 µm using a T die extruder. In Table 1, as a standard of "parts by mass", the total of the high-density polyethylene (A) and the ultra-high-molecular-weight polyethylene (B), which are resins, was set to 100 parts by mass.

**TABLE 1**

| | Composition of base layer (parts by mass) | | | | |
|---|---|---|---|---|---|
| | HDPE1 | HDPE2 | UHMWPE1 | UHMWPE2 | Titanium oxide |
| Example 1 | 95 | | 5 | | |
| Example 2 | 95 | | 5 | | 3 |
| Example 3 | 90 | | 10 | | |
| Example 4 | 90 | | 10 | | 3 |
| Example 5 | 85 | | 15 | | |
| Example 6 | 80 | | 20 | | |
| Example 7 | 95 | | | 5 | |
| Example 8 | 90 | | | 10 | |
| Comparative Example 1 | 100 | | | | |
| Comparative Example 2 | | 100 | | | |
| Comparative Example 3 | 100 | | | | 3 |
| Comparative Example 4 | 75 | | 25 | | |

The meanings of abbreviations used in Table 1 are as described below.

"HDPE1" is a high-density polyethylene having a density ρ of 0.949 g/cm³, a melting point Tm of 130°C and a melt mass-flow rate MFR of 1.1 g/10 min (at a temperature of 190°C under a load of 2.16 kg).

"HDPE2" is a high-density polyethylene having a density ρ of 0.952 g/cm³, a melting point Tm of 129°C and a melt mass-flow rate MFR of 21 g/10 min (at a temperature of 190°C under a load of 2.16 kg).

"UHMWPE1" is an ultra-high-molecular-weight polyethylene powder having a density ρ of 0.940 g/cm³, a melting point Tm of 136°C, an average grain diameter of 30 µm and a weight-average molecular weight of 2,000,000 (manufactured by Mitsui Fine Chemicals, Inc., trade name MIPELON (registered trademark) XM-220).

"UHMWPE2" is an ultra-high-molecular-weight polyethylene powder having a density ρ of 0.940 g/cm³, a melting point Tm of 136°C, an average grain diameter of 25 µm and a weight-average molecular weight of 2,000,000 (manufactured by Mitsui Fine Chemicals, Inc., trade name MIPELON (registered trademark) XM-221U).

"Titanium oxide" is a titanium oxide powder having a TiO₂ content of 95% and an average grain diameter of 25 µm (manufactured by Ishihara Sangyo Kaisha, Ltd., trade name CR-Super70).

### (Method for evaluating base material film)

### (1) Method for measuring melt mass-flow rate (MFR)

The base material film formed into a thickness of 100 µm was pulverized to obtain a measurement sample. For Comparative Examples 1 and 2 where the composition of the base layer was made of one resin, pellets of the high-density polyethylene that was used for the formation of the base material film were used as a measurement sample as they are. For each measurement sample, the value (g/10 min) of the melt mass-flow rate (MFR) was measured under conditions of a temperature of 300°C and a load of 2.16 kg. The value of MFR of the base material film serves as an index of workability and thermal distortion resistance.

### (2) Method for measuring number of times of bending

The base material film formed into a thickness of 100 µm was cut into sizes of 15 mm in width and 100 mm in length to obtain a measurement sample. The measurement sample was repeatedly bent at a bending angle of 135° with a force of 1.5 kgf { 14.7 N} using an MIT folding endurance tester (manufactured by Tester Sangyo Co., Ltd.), and the number of times of bending until the measurement sample ruptured was measured. The value of the number of times of bending of the base material film serves as an index of impact resistance and embrittlement resistance.

### (3) Method for evaluating thermal distortion property

The base material film formed into a thickness of 100 µm was cut into sizes of 15 mm in width and 100 mm in length to obtain a measurement sample. The measurement sample was left to stand on a hot plate at a temperature of 150°C for one minute, and the occurrence of thermal contraction or warpage was visually confirmed. In a case where neither thermal contraction nor warpage was confirmed in the base material film, evaluation was "no thermal distortion occurs", and, in a case where thermal contraction or warpage was confirmed in the base material film, evaluation was "thermal distortion occurs."

### (Evaluation results of base material film)

The evaluation results of the base material films are shown in Table 2.

**TABLE 2**

| | Extrusion | MFR (g/10 min) (300°C, 2.16 kg) | Number of times of bending until rupture | Thermal distortion property |
|---|---|---|---|---|
| Example 1 | Possible | 2.4 | 52,155 | No thermal distortion occurs |
| Example 2 | Possible | 2.5 | 22,484 | No thermal distortion occurs |
| Example 3 | Possible | 1.4 | 58,936, | No thermal distortion occurs |
| Example 4 | Possible | 1.4 | 24,598 | No thermal distortion occurs |
| Example 5 | Possible | 0.6 | 113,965 | No thermal distortion occurs |
| Example 6 | Possible | 0.3 | 61,183 | No thermal distortion occurs |
| Example 7 | Possible | 2.3 | 149,953 | No thermal distortion occurs |
| Example 8 | Possible | 1.3 | 107,639 | No thermal distortion occurs |
| Comparative Example 1 | Possible | 3.9 | 22,179 | Thermal distortion occurs |
| Comparative Example 2 | Possible | Unmeasurable | 1,114 | Thermal distortion occurs |
| Comparative Example 3 | Possible | 4.0 | 15,073 | Thermal distortion occurs |
| Comparative Example 4 | Impossible | Unmeasurable | Unmeasurable | Unevaluatable |

According to Examples 1 to 8, the compositions of the base layers were within a predetermined range, whereby it was possible to produce the base material films having a thickness of 100 µm by extrusion. In addition, in the compositions of Examples 1 to 8, since the values of the melt mass-flow rate (MFR) under the conditions of a temperature of 300°C and a load of 2.16 kg were small, and neither thermal contraction nor warpage was confirmed under the conditions of a temperature of 150°C for one minute, the thermal distortion resistance of the base material films improved. In addition, in the base material films of Examples 1 to 8, since the numbers of times of bending were large, the impact resistance and the embrittlement resistance improved.

According to Comparative Example 1, the high-density polyethylene (HDPE1) had thermal distortion resistance high enough to measure the value of the melt mass-flow rate (MFR) under the conditions of a temperature of 300°C and a load of 2.16 kg, but the thermal contraction or warpage of the base material film occurred under the conditions of a temperature of 150°C for one minute. In addition, in the base material film of Comparative Example 1, the number of times of bending was small.

According to Comparative Example 2, the high-density polyethylene (HDPE2) was excessively fluid at a high temperature of 300°C, and it became impossible to measure the value of the melt mass-flow rate (MFR) under the conditions of a temperature of 300°C and a load of 2.16 kg. In addition, in Comparative Example 2, the thermal contraction or warpage of the base material film occurred under the conditions of a temperature of 150°C for one minute. In addition, in the base material film of Comparative Example 2, the number of times of bending was significantly small.

According to Comparative Example 3, titanium oxide was blended with the same high-density polyethylene (HDPE1) as in Comparative Example 1, but the thermal contraction or warpage of the base material film occurred under the conditions of a temperature of 150°C for one minute. In addition, in the base material film of Comparative Example 3, the number of times of bending of the base material film was small.

According to Comparative Example 4, the molten resin was poorly fluid, and it was not possible to produce a base material film having a thickness of 100 µm. Therefore, it became impossible to measure the melt mass-flow rate (MFR) under the conditions of a temperature of 300°C and a load of 2.16 kg and the number of times of bending, and it became impossible to evaluate the thermal distortion property.

The numbers of times of bending shown in Table 2 are considered to be affected by the presence or absence of titanium oxide. When the base material films of Examples 1 and 3 and Comparative Example 1 where no titanium oxide was blended were compared, the numbers of times of bending of the base material films of Examples 1 and 3 became twice or more the number of times of bending of the base material films of Comparative Examples 1. When the base material films of Examples 2 and 4 and Comparative Example 3 where titanium oxide was blended were compared, the numbers of times of bending of the base material films of Examples 2 and 4 became approximately 1.5 times the number of times of bending of the base material films of Comparative Examples 2.

### (Method for producing layered film)

When the base material films were melted and extruded with the compositions of the base layers of Examples 1 to 8 shown in Table 1, sealant layers were laminated by co-extrusion, and layered films having two layers of the base layer having a thickness of 100 µm and the sealant layer having a thickness of 50 µm were produced.

As a material for the sealant layers, a metallocene catalysis-polymerized C6-LLDPE having a density ρ of 0.937 g/cm³, a melting point Tm of 126°C and a melt mass-flow rate MFR of 3.5 g/10 min (at a temperature of 190°C under a load of 2.16 kg) was used.

### (Manufacturing of packaging bag)

Three-side seal bags were produced using the above-described layered films in which the sealant layer was laminated on each of the base layers of Examples 1 to 8 by co-extrusion at a heat seal temperature of 160°C and a seal pressure of 0.2 MPa for a seal time of one second. At the time of producing packaging bags having each of the base layers of Examples 1 to 8, thermal distortion of the layered films due to the heating of the seal portions was not confirmed.

### INDUSTRIAL APPLICABILITY

According to the present invention, it is possible to provide a layered film having a base layer of a polyethylene resin and a packaging bag that are excellent in terms of thermal distortion resistance, impact resistance and embrittlement resistance, and thus the present invention is industrially applicable.

### REFERENCE SIGNS LIST

1 Layered film
2 Base layer
4 Sealant layer
6 Outer layer
10 Standing pouch (packaging bag)
12 Container body
14 Spout member
16 Trunk film
18 Bottom film
20 Heat seal portion

## Claims

1. A layered film comprising:
a base layer; and
a sealant layer that becomes one outermost surface of the layered film,
wherein the base layer contains 77 to 99 parts by mass of a high-density polyethylene (A) having a density of 0.942 to 0.970 g/cm³ and a melt mass-flow rate of 0.1 to 3.0 g/10 min under conditions of a temperature of 190°C and a load of 2.16 kg and 1 to 23 parts by mass of an ultra-high-molecular-weight polyethylene (B) having a density of 0.930 to 0.960 g/cm³ in a total of 100 parts by mass.

2. The layered film according to Claim 1,
wherein the ultra-high-molecular-weight polyethylene (B) in the base layer has an average grain diameter of 5 to 200 µm and a weight-average molecular weight of 500,000 or more.

3. The layered film according to Claim 1 or 2,
wherein the base layer contains a shielding agent (C) in a fraction of 5 parts by mass or less.

4. The layered film according to Claim 3,
wherein the shielding agent (C) is titanium oxide.

5. The layered film according to any one of Claims 1 to 4,
wherein the sealant layer is a layer made of a polyethylene resin.

6. The layered film according to any one of Claims 1 to 5, further comprising:
a layer made of a polyethylene resin on a side of the base layer opposite to the sealant layer.

7. The layered film according to any one of Claims 1 to 6,
wherein the base layer is formed of a resin composition obtained by melting and kneading the high-density polyethylene (A) and the ultra-high-molecular-weight polyethylene (B).

8. The layered film according to any one of Claims 1 to 7,
wherein the base layer is formed into a film shape by extrusion.

9. A packaging bag formed using the layered film according to any one of Claims 1 to 8.
